# EUROPÄISCHE PATENTSCHRIFT

(11) **EP 2 156 988 B1**
(45) Veröffentlichungstag und Bekanntmachung des Hinweises auf die Patenterteilung: **20.04.2011**
(21) Anmeldenummer: 08014895.0
(22) Anmeldetag: 22.08.2008
(51) Int. Cl.: B60R 19/32, F16F 9/53

(54) **Energie absorbierende Vorrichtung**
Energy-absorbing device
Dispositif absorbant l'énergie

(43) Veröffentlichungstag der Anmeldung: 24.02.2010
(73) Patentinhaber: ThyssenKrupp Presta Aktiengesellschaft, 9492 Eschen (LI)
(72) Erfinder: Battlogg, Stefan, 6771 St. Anton i. M. (AT); Elsensohn, Gernot, 6771 St. Anton i. M. (AT); Kirmsze, Helmut, 9494 Schaan (LI); Pösel, Jürgen, 6700 Bludenz (AT)
(74) Vertreter: Torggler, Paul Norbert

(56) Entgegenhaltungen:
- WO-A-2007/068435
- WO-A-2007/068436
- DE-A1- 19 820 570
- US-B1- 6 279 952

## Beschreibung

Die Erfindung betrifft eine Energie absorbierende Vorrichtung für den einmaligen Insassenschutz in Fahrzeugen, mit einem Behälter, der über eine Engstelle in einen Austrittskanal übergeht, wobei im Behälter eine magnetorheologische Flüssigkeit enthalten ist, die bei einem Aufprall des Fahrzeugs durch eine Fließstrecke gedrückt wird, die im Austrittskanal des Behälters vorgesehen ist, und mit einer ein veränderbares Magnetfeld erzeugenden Einrichtung, die zwei ebene, der Fließstrecke zugeordnete Polflächen aufweist, über die das Magnetfeld zur Regelung der Fließeigenschaften auf die magnetorheologische Flüssigkeit einwirkt

Um die Fließfähigkeit der magnetorheologischen Flüssigkeit mittels eines Magnetfeldes so beeinflussen zu können, dass der Strömungswiderstand der Fließstrecke sich ändert, sind verschiedene Kriterien zu erfüllen. Ein von einer Spule erzeugtes Magnetfeld muss in die magnetorheologische Flüssigkeit eingebracht werden, wofür Elemente und Teile der Vorrichtung, die für den direkten Weg der Feldlinien durch die magnetorheologische Flüssigkeit vorgesehen sind, besser magnetisch leitend sein sollten, als andere Elemente und Teile, die außerhalb des direkten Weges der Feldlinien sind.

Aus der DE 19820570 ist ein Schwingungsdämpfer mit einem zylindrischen Behälter bekannt, in dem ein Kolben und eine elektrorheologische Flüssigkeit enthalten sind. Um den Kolben bewegen zu können, ist er aus voneinander beabstandeten konzentrischen Zylindermänteln gebildet, an die jeweils zur Veränderung der Viskosität die Spannung zur Ausbildung eines elektrischen Feldes angelegt wird. Als Schwingungsdämpfer ist das System für den mehrmaligen Gebrauch gedacht, wobei in einem geschlossenen System zwei Druckkammem durch den beweglichen Kolben gebildet sind.

Eine Vorrichtung für den einmaligen Insassenschutz ist beispielsweise in der WO 2007/068436 beschrieben. Das Magnetfeld wird von einer Spule erzeugt, die mit einem C-förmigen Kern aus einem magnetisch aktiven Werkstoff, insbesondere einem Eisenkern, versehen ist. Zwischen den beiden gering beabstandeten Polflächen des C-förmigen Kerns wird ein im Querschnitt rechteckiger Austrittskanal aus dem Behälter hindurchgeführt, der die Fließstrecke enthält. Die an den Polflächen anliegenden Wände des Austrittskanales sind aus magnetisch gut leitendem Material, die Seitenwände hingegen aus einem magnetisch zumindest schlechter leitenden Material als die magnetorheologische Flüssigkeit.

Die besonderen Umstände bei einem Aufprall lassen nur eine äußerst kurze Zeitspanne übrig, innerhalb der die Fließfähigkeit der magnetorheologischen Flüssigkeit verändert werden muss. Für die Änderung der Fließfähigkeit wird eine Mindestverwellzeit im Magnetfeld benötigt, sodass der Querschnitt des Austrittskanales und dessen magnetisierende Länge, also die Länge der Polflächen das in der Mindestverweilzeit magnetisierbare Volumen der magnetorheologischen Flüssigkeit vorgeben. Um den aus der die Flüssigkeit im Behälter beaufschlagenden Druckfläche und deren Verfahrgeschwindigkeit beim Aufprall resultierenden Volumenstrom an den durch die Mindestverweilzeit bestimmten Volumenstrom anzugleichen, sind bestimmte Dimensionen des Austrittskanales erforderlich. Da die durch den Abstand zwischen den Polflächen bestimmte Höhe des Austrittskanales nur bedingt vergrößert werden darf, können also meist nur die Breite des Austrittskanals und die Länge, innerhalb der das Magnetfeld wirkt, geändert werden, sofern nicht Bauraumprobleme auch diese begrenzen.

Gemäß der WO 2007/068436 wird versucht, die Verweilzeit der Flüssigkeit zwischen den Polflächen durch Einbauten in die Fließstrecke zu vergrößern, wenn die Länge der Fließstrecke, innerhalb der das Magnetfeld wirkt, zu gering ist, beispielsweise durch eine Trennplatte mit einer Mehrzahl von beidseitig hochstehenden Stegen, die in versetzten Reihen angeordnet sind. Der Weg der Flüssigkeit wird dadurch verlängert, jedoch wird durch die Stege die Querschnittsfläche des Austrittskanals und damit das pro Zeiteinheit magnetisierbare Volumen verkleinert.

Die Erfindung hat es sich nun zur Aufgabe gestellt, auch bei äußerst beschränkten Platzverhältnissen die die Viskositätsänderung magnetorheologischen Flüssigkeit bewirkenden magnetischen Kräfte einzubringen, und löst dies dadurch, dass die Fließstrecke durch zumindest eine zwei zusätzliche ebene Polflächen bildende Trennwand in zumindest zwei Strömungsbahnen unterteilt ist.

Jede Trennwand reduziert zwar die Querschnittsfläche der Fließstrecke und damit das pro Zeiteinheit magnetisierbare Volumen der Flüssigkeit, bewirkt aber durch die kleineren Abstände zwischen je zwei Polflächen eine wesentlich bessere Magnetisierung. Dies erlaubt es die Gesamthöhe der Fließstrecke so zu vergrößern, dass deren Durchtlussquerschnitt trotz der Trennwand dem zu magnetisierenden Volumen der durchzudruckenden magnetorheologischen Flüssigkeit entsprechend groß gehalten werden kann. Die zusätzlichen Polflächen erhöhen die Konzentration des Magnetfeldes auf die mit dem Magnetfeld in Wechselwirkung tretenden Partikel in der magnetorheologischen Flüssigkeit. Zur Verbesserung der Wirkung sollten dabei in der Strömung Turbulenzen möglichst vermieden werden, zumindest nicht gefördert werden.

Bevorzugt werden mehrere Trennwände zu einem Paket zusammen gefasst und in die Fließstrecke eingesetzt. In diesem Paket sind die für die Stärke der Magnetisierung maßgeblichen Abstände zwischen den Polflächen sehr klein.

In einer ersten Ausführung kann das Paket aus sich parallel zu den Strömungsbahnen erstreckenden Trennwänden aufgebaut sein, die durch hoch stehende Distanzstücke oder Laschen, insbesondere hochgebogene Randlaschen auf Abstand gehalten sind. Über eine beliebige Verbindung an den Laschen, direkte Verklebung, Verlötung, Klebestreifen oder dergleichen, kann das Paket zusammen gehalten werden. Beispielsweise können 16 Trennwände á 0,2 mm Dicke vorgesehen sein, die den Austrittskanal in 17 Strömungsbahnen á 0,2 mm unterteilen. Der Austrittskanal hat somit im Bereich der Polflächen eine lichte Höhe von 6,6 mm. Das Paket von Trennwänden kann in einer anderen Ausführung der Erfindung auch durch eine zickzackartige Faltung einer Materialbahn hergestellt sein.

In einer weiteren Ausführung kann die zumindest eine Trennwand sich in einer Querschnittsebene der Fließstrecke erstrecken und Schlitze aufweisen, die die Strömungsbahnen bilden, wobei die Schlitzwände die zusätzlichen Polflächen darstellen. Eine derartige Trennwand kann als Blechstanzteil, als Sinterteil oder als MIM-Teil (im Metallspritzguss) hergestellt werden, wobei sie beispielsweise leiterartig oder kammartig erscheint. Bevorzugt können die verbleibenden Stege zwischen den Schlitzen sich beidseitig eines mittleren Verbindungsstegs erstrecken.

Um jede notwendige Länge der Strömungsbahnen zu erreichen, können in dieser Ausführung mehrere derartige Trennwände dicht aneinander gereiht sein, wobei die Schlitze fluchten.

Besonders vorteilhaft und leicht herstellbar ist eine Ausführung, in der die Trennwände aus Transformatorenblech gestanzt und zumindest an den einander berührenden **(weiter auf Seite 4 der ursprünglichen Beschreibung)**

darstellen. Eine derartige Trennwand kann als Blechstanzteil, als Sinterteil oder als MIM-Teil (im Metallspritzguss) hergestellt werden, wobei sie beispielsweise leiterartig oder kammartig erscheint. Bevorzugt können die verbleibenden Stege zwischen den Schlitzen sich beidseitig eines mittleren Verbindungsstegs erstrecken.

Um jede notwendige Länge der Strömungsbahnen zu erreichen, können in dieser Ausführung mehrere derartige Trennwände dicht aneinander gereiht sein, wobei die Schlitze fluchten.

Besonders vorteilhaft und leicht herstellbar ist eine Ausführung, in der die Trennwände aus Transformatorenblech gestanzt und zumindest an den einander berührenden **(weiter auf Seite 4 der ursprünglichen Beschreibung)** Flächen isoliert, insbesondere lackiert sind. Die Isolierung verhindert, dass entstehende Wirbelströme sich addieren können.

Die Erfindung macht es auch in einfacher Weise möglich, den Austrittskanal mit einem zylindrischen Querschnitt zu versehen. In dieser bevorzugten Ausführungsform umfasst die Einrichtung ein durchgehendes zylindrisches Rohr, in dem die Engstelle durch den Einbau der Trennwand, insbesondere aber natürlich durch den Einbau eines oben beschriebenen Paketes von Trennwänden gebildet ist, wobei dem Paket beidseitig als Abschluss je ein im Querschnitt kreissegmentförmiges Element aus einem magnetisch gut leitenden Werkstoff zugeordnet ist, wie er für Spulenkerne in der Praxis verwendet und in weiterer Folge als Spulenkernmaterial bezeichnet wird, beispielsweise aus einem Trafoblech oder aus Ferritpulver, sodass das zylindrische Rohr ausgefüllt ist. Das zylindrische Rohr besteht dabei insbesondere aus einem magnetisch nicht oder zumindest schlechter leitendem Material als die durch die Strömungsbahnen zu drückende magnetorheologische Flüssigkeit, um einen magnetischen Kurzschluss über die Rohrwand zu vermeiden. Auch das Paket selbst kann entsprechend dieser Forderung hinsichtlich der magnetischen Leitfähigkeit aufgebaut sein, indem beispielsweise sich parallel zu den Strömungsbahnen erstreckende Trennwände aus Spulenkernmaterial durch Stege aus zumindest schlechter magnetisch leitendem Material voneinander beabstandet sind.

Werden die Trennwände, wie oben beschrieben, aus dem Spulenkernmaterial gestanzt, so können die verbleibenden Stege nicht aus einem magnetisch schlechter leitenden Material bestehen; es hat sich aber gezeigt, dass die Stege bei entsprechender Minimierung so magnetisch gesättigt werden, dass das Magnetfeld 2007/068435 näher beschrieben Diese Ausführung der Erfindung ermöglicht eine besonders einfache und kompakte Ausführung, bei sehr geringen Wirküngsverlusten des eingebrachten Magnetfeldes.

In einer weiteren bevorzugten Ausführung, die eine sehr raumsparende Konstruktion darstellt, kann die das Magnetfeld erzeugende Spule im Inneren des Austrittskanals vorgesehen werden (innen liegende Spule), wobei vorzugsweise die Trennwände in zwei Paketen zusammen gefasst sind, die beiderseits des von der Spule umwickelten Kerns angeordnet sind. Der zwischen den beiden Paketen von Trennwänden angeordnete Kern ist bevorzugt als annähernd quaderförmiger Block ausgeführt, um den die Spulenwicklung gelegt ist, deren Achse senkrecht zur Strömungsrichtung durch den Austrittskanal liegt. Der Kern innerhalb der Spule kann ebenfalls Strömungsbahnen enthalten, wenn die Wicklung der Spule die Ein- und Austrittsöffnungen der Strömungsbahnen frei lässt. Eine derartige Spule ist insbesodere dreidimensional gewickelt, wobei zwischen je zwei in Längsrichtung sich erstreckenden geraden Abschnitten ein etwa halbkreisförmiger Abschnitt ausgebildet ist.

In einer weiteren bevorzugten Ausführung können zwei derartige dreidimensionale, innen liegende Spulen vorgesehen werden, in denen jeweils als Kern ein kreissegmentförmiges Element angeordnet ist, wobei zwischen den beiden kreissegmentförmigen Elementen ein Paket von Trennwänden vorgesehen ist. Mit Vorteil kann im Innem des zwischen den zwei Spulen liegenden Pakets, wie oben bereits erwähnt, ein durchgehender Hohlraum ausgebildet sein.

Diese Ausführung ist insbesondere auch von Vorteil, wenn Behälter und Austrittskanal einteilig aus einem durchgehenden Rohr gefertigt sind. Ist das Rohr Zylindrisch, wie es besonders bei höheren Drücken vorteilhaft zur Aufnahme der Spannungen bei geringer Verformung ist, werden die beiden Pakete wiederum durch ein im Querschnitt kreissegmentförmiges Element aus Spulenkernmaterial vervollständigt, deren gebogene Flächen an der Rohrinnenseite anliegen. Im Gegensatz zur vorstehend beschriebenen Ausführung mit einer außen angeordneten Spule ist in dieser Ausführung das Rohr bevorzugt aus Spulenkernmaterial oder aus einem niedrig legierten Stahl, um den magnetischen Kreis ohne zusätzliche Elemente direkt zu schließen.

Werden die Trennwände senkrecht zur Fließstrecke vorgesehen und aus Transformatorblech oder einem anderen Spulenkernmaterial gestanzt, so ist weiters bevorzugt vorgesehen, dass in jeder Trennwand zumindest die die Schlitze trennenden Stege und vorzugsweise auch ein mittlerer dem Kern zugehöriger Bereich sowie die kreissegmentförmigen Elemente einstückig und über mindestens einen Verbindungssteg zusammenhängend ausgebildet sind.

Derartige erfindungsgemäße Energieabsorptionsvorrichtungen können beispielsweise in Lenksäulen zur Absorption der Stoßenergie, die im Falle eines Unfalls vom Fahrer auf das Lenkrad übertragen wird, eingesetzt werden. Hier muss über eine lange Lebensdauer die Funktionalität sichergestellt sein. Damit die magnetomeologische Flüssigkeit möglichst wenig Veränderung über die Lebensdauer ausgesetzt ist, wird die magnetorheologische Flüssigkeit in einer bevorzugten Ausführung in einer Kapsel dicht eingeschlossen. Die Kapsel weist in ihrer Wand bevorzugt einen vorgegebenen Berstbereich auf, der bei Überschreiten eines vordefinierten Innendrucks aufplatzt und die magnetorheologische Flüssigkeit aus der Kapsel austreten lässt. Dabei ist es denkbar und möglich nur die magnetorheologische Flüssigkeit in die Kapsel einzuschließen und die Kapsel so in den Behälter einzusetzen, dass der Berstbereich an der Engstelle, an die der Austrittskanal anschließt, zu liegen kommt.

In einer alternativen Ausführungsform sind die gesamte Vorrichtung oder zumindest der mit der magnetorheologischen Flüssigkeit gefüllte Behälter und die Fließstrecke von der Kapsel umschlossen. Der Berstbereich ist in diesem Fall an der von dem Behälter abgewandten Seite der Fließstrecke angeordnet, die bereits von Anfang an mit Flüssigkeit befüllt ist. Öffnet sich der Berstbereich, so tritt die Flüssigkeit aus der entstanden Öffnung aus und strömt durch den Austrittskanal aus. Auf diese Weise kann die "Leerhubzeit", bis die Gegenkraft durch die Strömung durch die Fließstrecke erzeugt ist, verkürzt werden. Zum Auffangen der Flüssigkeit kann eine zusätzliche Auffangkapsel vorgesehen sein, die die erste Kapsel umschließt. Weiter kann das Magnetfeld bzw. das felderzeugende Bauteil im Bedarfsfall zum Aufheizen der Flüssigkeit verwendet werden.

In einer weiteren Ausführung der erfindungsgemäßen Vorrichtung kann auch die gesamte Einrichtung zur Erzeugung des veränderbaren Magnetfelds (Spule, Trennwandpakete, Kern, etc.) in einem zylindrischen Rohr axial verfahren werden, beispielsweise um die Länge der Lenksäule auf unterschiedliche Fahrer einzustellen. Vorteilhaft kann dabei die Einrichtung mittels einer Kolbenstange, durch deren Bohrung die Kabel für die Energieversorgung geführt werden können, gezogen oder gedrückt, oder mittels eines Seiles bewegt werden.

Nachstehend wird nun die Erfindung anhand der Figuren der beiliegenden Zeichnungen näher beschrieben, ohne darauf beschränkt zu sein. Es zeigen:
- Fig. 1: einen schematischen Ausschnitt aus einer Lenksäule mit einer erfindungsgemäßen Vorrichtung,
- Fig. 2: eine schematische Schrägansicht einer ersten Ausführung der erfindungsgemäßen Vorrichtung,
- Fig. 3: eine Stirnansicht einer ersten Ausführung der Vorrichtung nach Fig. 2 mit dem Verlauf der Feldlinien eines Magnetfeldes,
- Fig. 4: eine Schrägansicht eines Paketes von Trennwänden einer ersten Ausführung,
- Fig. 5: einen Querschnitt durch eine zweite Ausführung der Vorrichtung,
- Fig. 6: eine teilgeschnittene Schrägansicht einer dritten Ausführung,
- Fig. 7: eine behälterseitige Stirnansicht der dritten Ausführung,
- Fig. 8: einen Längsschnitt durch die dritte Ausführung der Vorrichtung,
- Fig. 9: eine zweite Ausführung einer Trennwand,
- Fig. 10: eine vergrößerte Seitenansicht eines Paketes von Trennwänden der zweiten Ausführung,
- Fig. 11: eine zweite Ausführung einer Magnetspule in Schrägansicht,
- Fig. 12: einen Querschnitt durch eine weitere Ausführung der Vorrichtung mit einer Magnetspule nach Fig. 11,
- Fig. 13: einen Längsschnitt durch eine fünfte Ausführung der Vorrichtung,
- Fig. 14: einen Längsschnitt ähnlich Fig. 8 durch eine sechste Ausführung, und
- Fig. 15: eine perspektivische Ansicht eines Trennwandstapels mit einzelnen Trennwandspulen.

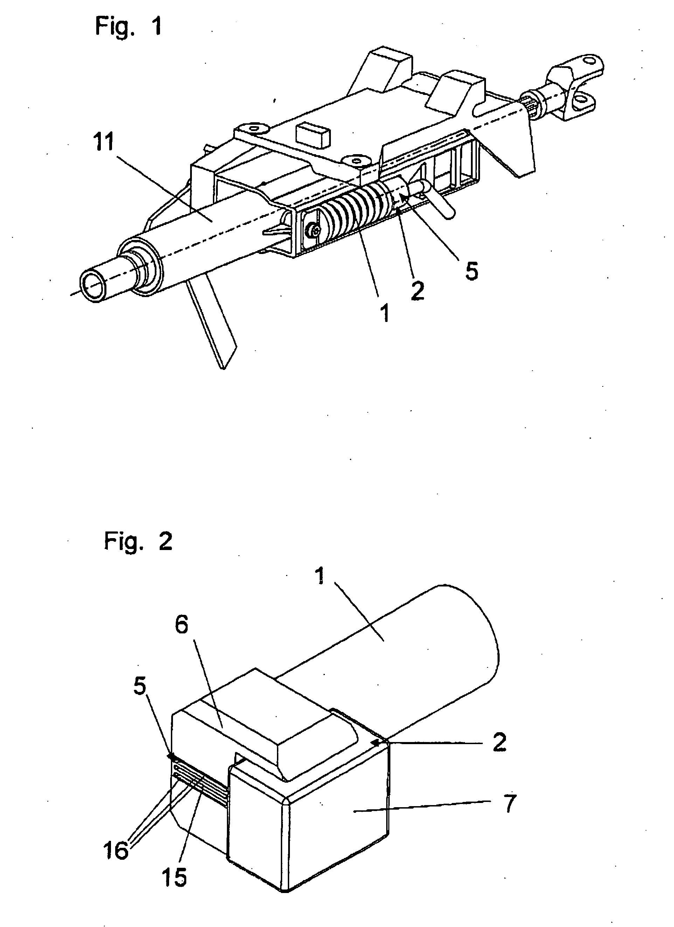

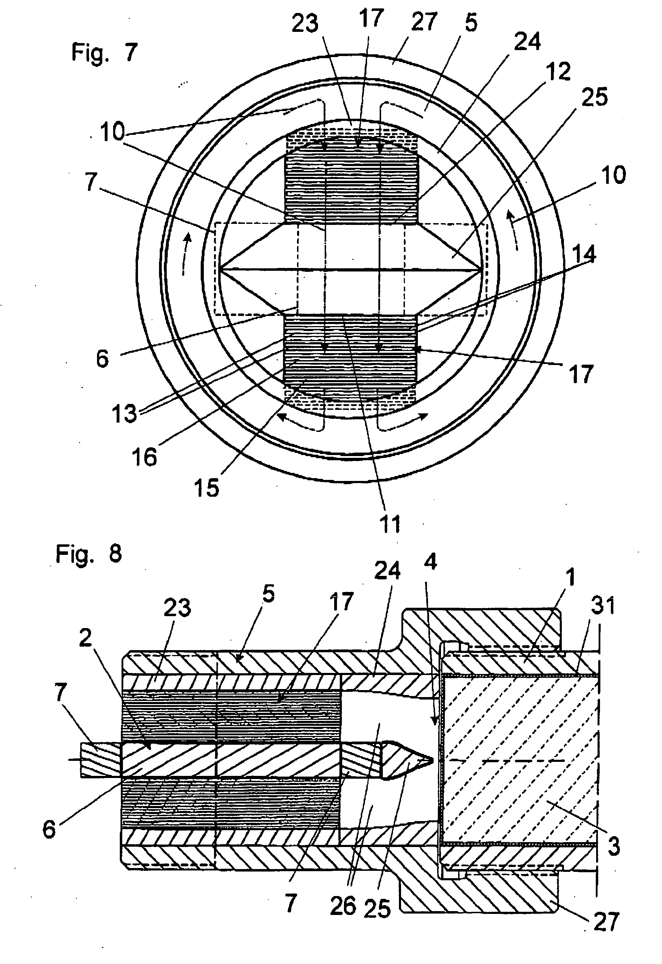

Eine Energie absorbierende Vorrichtung kann, wie Fig. 1 zeigt, beispielsweise an einer Lenksäule 11 parallel zu deren bei einem Zusammenstoß längenverschiebbaren Teilen vorgesehen sein. Die Vorrichtung weist einen Behälter 1 auf, dessen Volumen verkleinerbar ist und in dem eine magnetorheologische Flüssigkeit 3 (Fig. 8) enthalten ist. Der Behälter 1 ist an einem Ende an einem verschiebbaren Teil der Lenksäule 11 fixiert, während das andere Ende, an das ein Austrittskanal anschließt, an einem nicht verschiebbaren Teil der Lenksäule 11 ansteht oder fixiert ist. Bei einem Aufprall kann sich die Lenksäule 11 verkürzen und die im Behälter 1 enthaltene magnetorheologische Flüssigkeit wird durch eine Fließstrecke 5 in den Austrittskanal gedrückt, in der das Auspressen der magnetorheologischen Flüssigkeit verzögert wird. Durch die so erzeugte Gegenkraft wird Aufprallenergie absorbiert.

Im Bereich der Engstelle 4 am Übergang zwischen dem Behälter 1 und der Fließstrecke 5 im Austrittskanal ist eine Einrichtung 2 zur Erzeugung eines veränderbaren Magnetfeldes vorgesehen. Die Einrichtung 2 umfasst einen Elektromagneten, über den ein Magnetfeld erzeugt wird, und das die Fließeigenschaften der magnetorheologischen Flüssigkeit beeinflusst. Der Elektromagnet kann über Signale von Sensoren, die einen Aufprall überwachen, in Abhängigkeit von verschiedenen Kriterien, wie Gewicht und Sitzposition des Fahrers usw., angesteuert werden, wobei das veränderliche Magnetfeld die Viskosität der durch die Öffnung zu drückenden magnetorheologischen Flüssigkeit 3 verändert und die Gegenkraft im System, ausgehend von der Engstelle 4 größer oder kleiner wird. Der Behälter 1 in Fig. 1 weist beispielsweise einen zusammendrückbaren Faltenbalg auf.

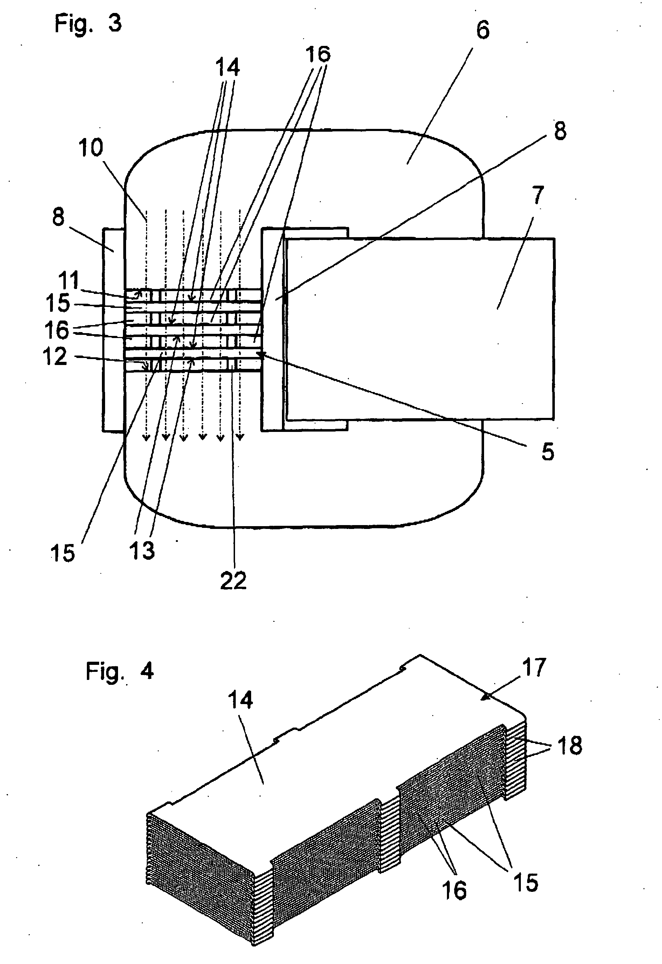

In Fig. 2 und 3 sind Details einer ersten Ausführung besser erkennbar. Der Behälter 1 ist insbesondere zylindrisch und enthält einen verschiebbaren Kolben, mittels dem die magnetorheologische Flüssigkeit 3 im Fall eines Aufpralls ausgedrückt wird. Der anschließende Austrittskanal ist im Querschnitt etwa rechteckig und die Fließstrecke 4 ist durch Trennwände 15, die aus einem gut leitenden Spulenkernmatecial bestehen und von denen in Fig. 2 zwei gezeigt sind, in Strömungsbahnen 16 unterteilt, die bei gleicher Breite eine wesentlich verringerte Höhe aufweisen. Die Einrichtung 2 dieser Ausführung weist eine Spule 7 auf, die mit einem C-förmigen Kern 6 aus einem magnetisch gut leitenden Sputenkernmaterial, beispielsweise aus Eisen versehen ist, und deren Achse senkrecht zur Strömungsrichtung der magnetorheologischen Flüssigkeit 3 in der Fließstrecke 5 bzw. den durch die Trennwände 15 gebildeten Strömungsbahnen 16 liegt. Der C-förmige Kern 6 kann auch aus Blechen, insbesondere Transformatorblechen zusammengesetzt sein.

Neben Eisen als günstigstes Material mit guten "magnetischen" Eigenschaften kommen weiters auch als Spulenkernmaterialien in Frage:
Silizium-Eisen, ein relativ günstiges Material mit guten magnetischen Eigenschaften, schlechter elektrischer Leitfähigkeit und geringster Remanenz,
magnetischer Stahl, ein Material mit etwas höherem Preis, nicht korrodierend und mit etwas schlechteren magnetischen Eigenschaften,
Nickel-Eisen, eine klassische weichmagnetische Legierung mit höheren Preis und höchster Permeabilität, und
Eisen-Kobalt als teuerstes Material, aber mit höchster Sättigungsflussdichte. Je nach Einsatzort sind andere Materialien möglich (z.B. Kern aus Ferrit, Eisenpulver oder anderen Pulvermischungen). Eventuell bieten "exotischere" Materialien Vorteile (z.B. BASF Catamold FN50: spritzgusstauglich).

Der C-förmige Kern 6 weist ebene, zueinander parallele Polflächen 11, 12 auf, zwischen denen der Austrittskanal hindurch geführt ist. Die magnetische Leitfähigkeit der magnetorheologischen Flüssigkeit 3 ist geringer als die des Kernes 6, sodass die Stärke des durch die Feldlinien 10 in Fig. 3 gezeigten Magnetfeldes von der Höhe des Spaltes zwischen den Polflächen 11, 12 abhängig ist. Jede Trennwand 15 verringert die Höhe und bildet zusätzliche ebene Polflächen 13, 14. Ist nur eine Trennwand 15 vorgesehen, so sind der oberen Strömungsbahn 16 die Polflächen 11 und 14, und der unteren Strömungsbahn 16 die Polflächen 13 und 12 zugeordnet Jede dazwischen liegende, weitere Strömungsbahn 16 ist von Polflächen 13 und 14 zweier Trennwände 15 beeinflussbar. In der Ausführung nach Fig. 2 ist die Fließstrecke 5 in dem den Kern 6 passierenden Abschnitt des Austrittskanals mit drei Strömungsbahnen 16 versehen, die nahezu die gesamte Breite einnehmen. In der Ausführung nach Fig. 3 sind die Seitenwände 8 des Austrittskanals zumindest innerhalb der Fließstrecke 5 aus einem magnetisch zumindest schlecht leitenden Material, und die Trennwände 15 aus Spulenkernmaterial sind durch Stege 22 voneinander beabstandet, die ebenfalls aus einem magnetisch zumindest schlecht leitenden Material bestehen.

Fig. 4 zeigt Trennwände 15, die an den beiden Längsseitenrändem abgebogene Laschen 18 aufweisen, durch die die Trennwände 15 auf Abstand gehalten werden, und eine Vielzahl von Strömungsbahnen 16 begrenzen. Die Trennwände 15 sind über die Laschen 18 durch Kleben, Löten, od. dgl. zu einem Paket 17 verbunden, das als Einheit in den Austrittskanal eingeschoben werden kann. Die Trennwände 15 bestehen beispielsweise aus einem Transformatorenblech, also einem Material mit sehr hoher magnetischer Leitfähigkeit, und das in Fig. 4 gezeigte Paket 17 umfasst je sechzehn Trennwände 15 und Strömungsbahnen 16, die alle dieselbe Dicke bzw. Höhe von beispielsweise 0,2 mm aufweisen. Das Paket 17 hat somit eine Gesamtdicke von 6,4 mm.

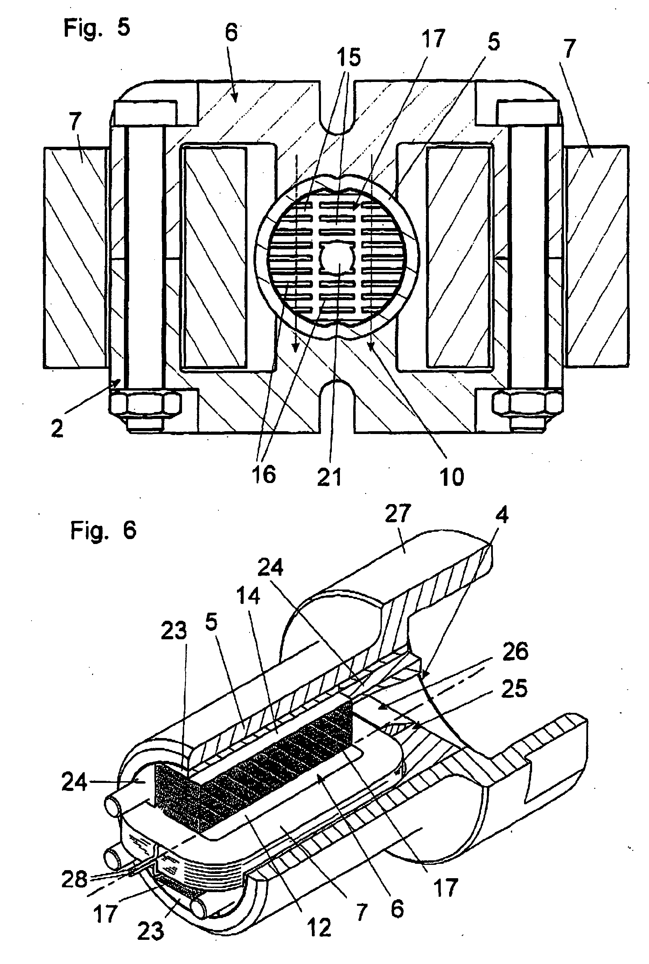

Fig. 5 zeigt eine Ausführung, in der der Austrittskanal einen zylindrischen Querschnitt aufweist, in dem ein Paket 17 von Trennwänden 15 angeordnet ist, dessen Aufbau in der in Fig. 3, in Fig. 4 oder in der noch zu den Fig. 6 bis 8 zu beschreibenden Weise sein kann. Das Paket 17 weist einen zentralen Hohlraum 21 auf, durch den beispielsweise eine Kolbenstange oder ein Seil geführt werden kann, das an der die magnetorheologische Flüssigkeit 3 aus dem Behälter 1 drückenden Druckfläche, beispielsweise einem Kolben zieht, wie dies in der erwähnten WO 2007/068435 gezeigt ist. Der Fließstrecke 5 im Austrittskanal ist eine Spulenanordnung 2 zugeordnet, deren Kern 6 aus zwei etwa E-förmigen Elementen zusammengesetzt ist, und die mit zwei Spulen 7 bestückt ist. Der Austrittskanal ist in dieser Ausführung insbesondere aus einem magnetisch schlecht leitenden Material gefertigt, um den Magnetfluss über die Kanalwand hintanzuhalten, sodass die Magnetfeldlinien 10 auch in dieser Ausführung möglichst dicht und senkrecht die Strömungsbahnen 16 durchsetzen.

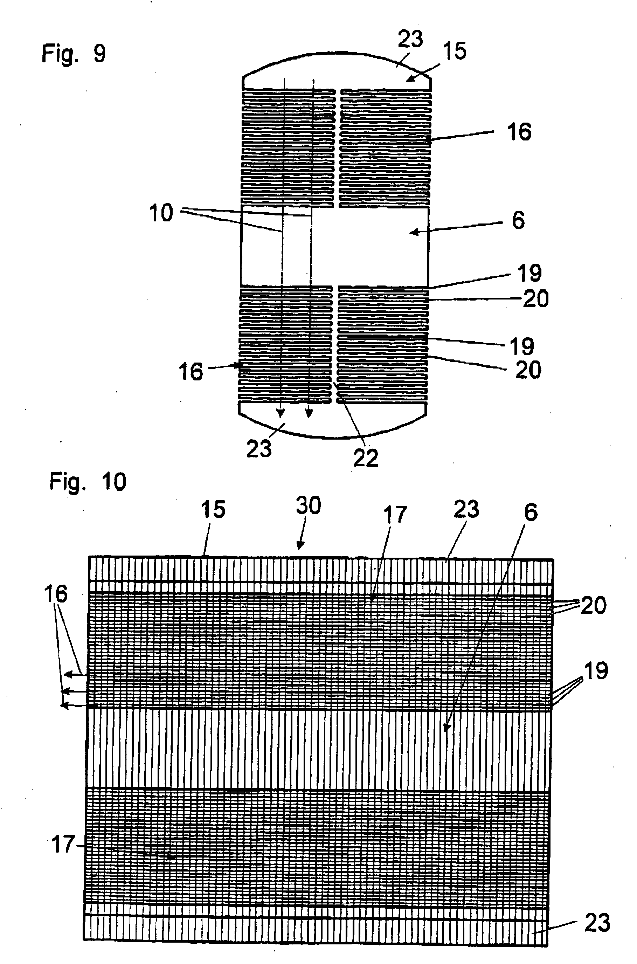

Die Fig. 6 bis 10 zeigen eine weitere Ausführung, in der die Magnetspulenanordnung im Inneren der Fließstrecke 5 vorgesehen ist. Fig. 6 zeigt eine abgewinkelt geschnittene Schrägansicht des Austrittskanals, der als zylindrisches Rohrstück mit Gewindemuffe 27 dargestellt ist. In die Gewindemuffe 27 ist der Behälter 1 eingeschraubt, der ebenfalls durch ein Rohrstück gleichen Durchmessers gebildet ist. Die Engstelle 4 zu Beginn der Fließstrecke 5 ist durch einen keilförmigen Mittelsteg 25 eines Einsatz 24 gebildet, sodass die aus dem Behälter 1 austretende magnetorheologische Flüssigkeit 3 in zwei Teilströme 26 unterteilt wird. Die Flüssigkeit 3 ist im Behälter 1 in einer dünnwandigen geschlossenen Kapsel 31 enthalten, wie dies beispielsweise in der WO 20071068016 gezeigt ist. Die Kapsel 31 ist beispielsweise aus einer Folie gefertigt, die nach dem Befüllen mit der Flüssigkeit verschweißt wird. Beim Aufprall platzt die Kapsel 31 und die Flüssigkeit 3 gelangt durch die Fließstrecke 5 in den Austrittskanal. In der Kapsel 31 kann ein gesonderter Berstbereich 32 vorgesehen sein, in dem das Aufplatzen speziell durch z.B. eine Materialschwächung erleichtert ist, damit das Ausströmen der Flüssigkeit definiert erfolgt. Vorteilhaft wird die Materialschwächung so ausgeführt, dass sich beim Aufplatzen keine Splitter/Fetzen bilden, welche die Strömung verschlechtern. Die Spulenanordnung 2 weist eine Magnetspule 7 auf, deren Achse senkrecht zur Fließstrecke 5 liegt und mittig im Austrittskanal so angeordnet ist, dass sie durch den keilförmigen Mittelsteg 25 abgedeckt ist (Fig. 8). Innerhalb der Spule 7 ist wiederum der Kern 6 angeordnet, der in dieser Ausführung quaderförmig ist und an den beidseitig ein Paket 17 von Trennwänden 15 mit einer Velzahl von Strömungsbahnen 16 anschließt, wie dies in Fig. 4 oder nachfolgend zu Fig. 9 und 10 beschrieben ist. Als Kern kann ein Permanentmagnet bzw. eine Kombination aus Permanentmagneten und weichmagnetischen Materialien verwendet werden. Als Abschluss jedes Paketes 17 ist jeweils ein annähernd kreissegmentförmiges Element 23 (Polkappe) aufgesetzt, das aus Spulenkernmaterial gefertigt ist und an der Innenseite des zylindrischen Austrittskanals anliegt. Der Austrittskanal ist in dieser Ausführung ebenfalls aus einem Spulenkernmaterial hergestellt, beispielsweise aus einem Eisenrohr od. dgl., um die Magnetfeldlinien 10 zu schließen. Die elektrischen Anschlussleitungen 28 sind am austrittseitigen Ende aus dem Austrittskanal in nicht näher dargestellter Weise herausgeführt. Wie Fig. 8 zeigt, ist dieses Ende ebenfalls mit einem Außengewinde versehen, auf das ein Auffangtopf od. dgl. aufgeschraubt sein kann, was aber nicht unbedingt erforderlich ist.

Wie bereits zu Fig. 4 erwähnt, kann das Paket 17 aus in Längsrichtung der Fließstrecke 5 sich erstreckenden Trennwänden 15 zusammengesetzt sein. Fig. 9 und 10 zeigen eine zweite Möglichkeit, ein Paket 17 von Trennwänden 15 mit Strömungsbahnen 16 auszugestalten. Jede Trennwand 15 erstreckt sich dabei in einer Radialebene senkrecht durch den Austrittskanal und die Strömungsbahnen 16 setzen sich aus Schlitzen 19 zusammen, die in die Trennwände 15 eingebracht sind. Eine derartige Trennwand 15 kann insbesondere aus einem Transformatorenblech od. dgl. gestanzt sein, wobei eine Vielzahl von Schlitzen 19 durch Stege 20 voneinander getrennt sind, die von einem mittleren Verbindungssteg 22 (Fig. 9) abstehen. Die Schlitze 19 erstrecken sich dadurch bis zum Rand hin und sind durch Seitenteile des Einsatzes 24 abgedeckt. Verbindungsstege 22 könnten natürlich auch an beiden Rändern vorgesehen sein, und die Schlitze 19 sich zwischen diesen ohne Mittelunterbrechung erstrecken. Wie Fig. 10 zeigt, werden mehrere Trennwände 15 direkt hintereinander angeordnet, wobei die Schlitze 19 fluchten. Die Schlitzwände stellen dabei die zusätzlichen Polflächen 13, 14 dar.

Denkbar ist auch die Ausbildung des Trennwandpakets als gefaltetes Element.

Die Fertigung durch Ausstanzen aus Transformatorenblech od. dgl. erlaubt es weiters, den Spulenkern 6, die beiden Pakete 17 von Trennwänden 15 und die kreissegmentförmigen Abschlusselemente 23 zur Anpassung an den zylindrischen Querschnitt des Austrittskanals 5 in einem Stück herzustellen, das dann die in Fig. 9 gezeigte Form aufweist. Die aneinanderliegenden Seitenflächen der Trennwände 15 können mit einem elektrisch isolierenden Lack versehen sein, sodass in den einzelnen Trennwänden 15 entstehende Wirbelströme sich nicht addieren. Der in Fig. 10 gezeigte Teil 30 wird mit der Spule 7 bestückt und in den Einsatz 24 eingelegt, der dann in den Austrittskanal eingebracht und axial fixiert wird, beispielsweise mit Hilfe des erwähnten am austrittsseitigen Ende aufschraubbaren Auffangtopfes. Der Einsatz 24 besteht aus einem magnetisch schlecht leitenden Material, beispielsweise einem Kunststoff.

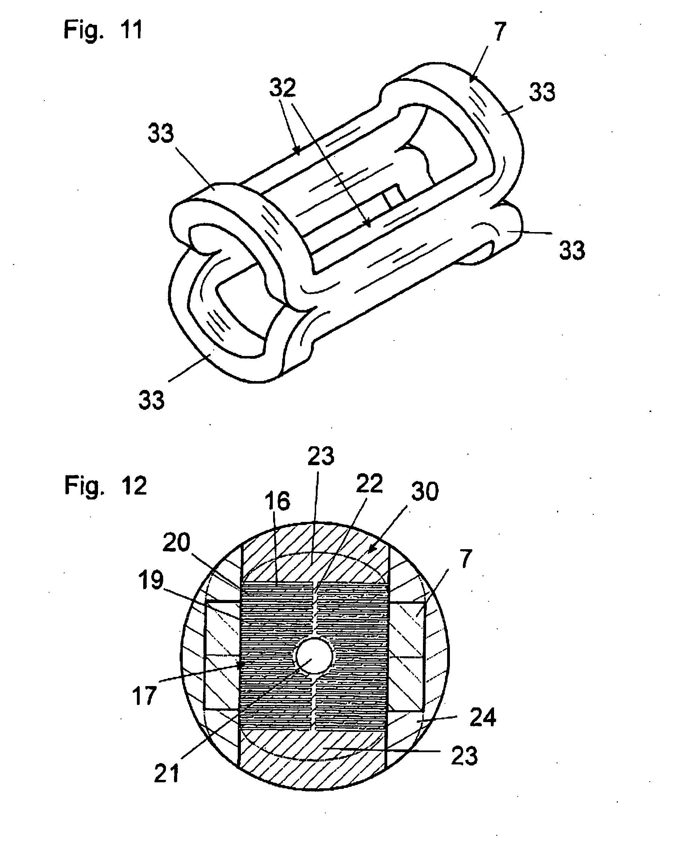

Die Fig. 11 und 12 zeigen eine Ausführung, in der die Spule 7 dreidimensional gewickelt ist, d.h. jede Wicklung liegt nicht in einer Ebene, sondern ist aus mehreren Abschnitten zusammengesetzt, wobei zwischen den in Längsrichtung der Fließstrecke 5 sich im Austrittskanal erstreckenden geraden Abschnitten 32 je ein etwa halbkreisförmiger Abschnitt 33 nach oben oder unten geführt ist. Die Spule 7 ist dadurch an den Enden geöffnet, und ein Teil 30 gemäß Fig. 12, kann einen mittleren Hohlraum 21 aufweisen, durch den beispielsweise das oben erwähnte Zugmittel zum Kolben bzw. Boden des Behälters 1 geführt sein kann. Der Hohlraum 21 kann aber auch zur Aufnahme eines Verbindungselementes für das Paket 17 von Trennwänden 15 dienen. Da die Spule 7 an den Enden aufgespreizt ist, kann auch der Kern 6 innerhalb der Spule 7 Strömungsbahnen 16 aufweisen, die zwischen fluchtenden Stegen 20 durch Schlitze 19 gebildet sind.

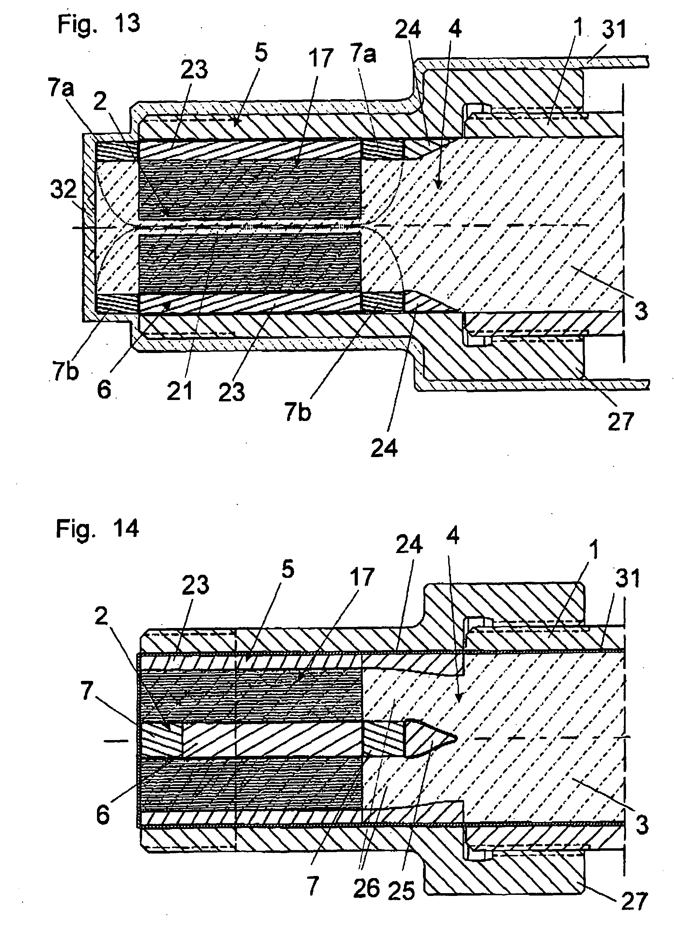

Die in Fig. 11 gezeigte Form kann sich auch aus zwei Spulen 7a, 7b ergeben, wie in Fig. 13 gezeigt ist. Jeder der beiden Spulen 7a, 7b ist in dieser Ausführung das kreissegmentförmige Element 23 als Kern zugeordnet, wobei zwischen den beiden Elementen 23 ein Paket 17 von Trennwänden 15 angeordnet ist, das Strömungsbahnen 16 und einen mittigen Hohlraum 21 aufweist. Der Einsatz 24 ist ringförmig und zum Behälter 1 hin abgeschrägt, wobei er die Engstelle 4 bildet. Auch in dieser Ausführung ist zumindest der die Fließstrecke 5 beinhaltende Abschnitt des Austrittskanals durch ein zylindrisches Rohrstück mit einer Gewindemuffe 27 gebildet, in die der Behälter 1 eingeschraubt ist. Der Behälter 1 und der Austrittskanal sind in dieser Ausführung gemeinsam innerhalb der Kapsel 31 angeordnet, wobei dessen durch die Materialschwächung gebildeter Berstbereich 32 am austrittseitigen Ende der Fließstrecke 5 vorgesehen ist. Die Fließstrecke 5 ist also ständig mit der magnetorheologischen Flüssigkeit 3 gefüllt. Der Berstbereich 32 ist so ausgelegt, dass die Kapsel 31 platzt, wenn auf die Energie absorbierende Vorrichtung eine Kraft einwirkt, die einen vordefinierten Wert überschreitet.

Eine ähnliche Ausführung zeigt Fig. 14. Hier ist wiederum eine ähnliche mittige Spulenanordnung wie in Fig. 6 bis 8 vorgesehen, wobei aber auch in der Ausführung nach Fig. 14 die Fließstrecke 5 in der Kapsel 31 vorgesehen ist. Die Kapsel 31 kleidet den Austrittskanal und den Behälter 1 aus und weist einen Berstbereich 32 am austrittseitigen Ende der Fließstrecke 5 auf, sodass auch in dieser Ausführung die Fließstrecke 5 ständig mit der magnetorheologischen Flüssigkeit 3 gefüllt ist.

Die in der magnetorheologischen Flüssigkeit 3 bzw. in der Fließstrecke 5 angeordnete Einrichtung zur Erzeugung des veränderbaren Magnetfeldes kann auch eine Leiterplatte mit einer Planarspule und einem Kern umfassen, wobei auf der Leiterplatte auch noch weitere elektronische Bauteile für die Steuerung der Einrichtung 2 angeordnet sein können.

Die Spulen 7 können nicht nur aus einem isolierten Kupferdraht, sondern auch aus einem Kupferband, einer Kupferfolie oder einer eloxierten Aluminiumfolie gefertigt sein.

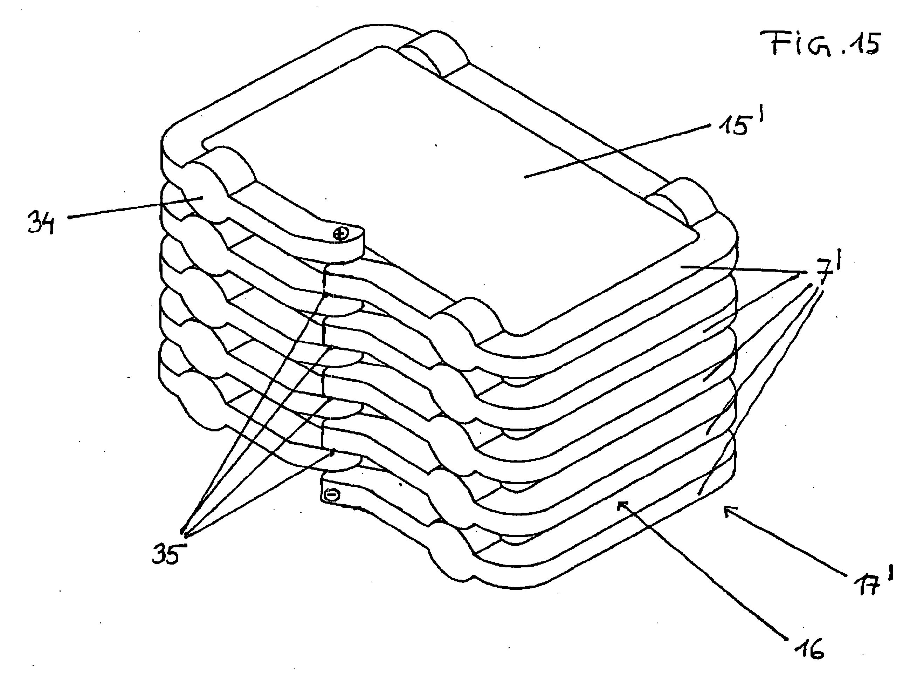

Die Fig. 15 zeigt ein Ausführungsbeispiels eines Trennwandstapels, bei dem die Fließstrecke durch mit Abstand voneinander angeordnete Trennwände 15' in mehrere Strömungsbahnen 16 unterteilt ist. Eine dieser Strömungsbahnen ist in Fig. 12 beispielhaft samt Angabe der Fließrichtung eingezeichnet.

Bei diesem Ausführungsbeispiel ist jeder Trennwand 15 aus magnetisch leitendem bzw. ferromagnetischem Material eine eigene Trennwand-Spule 7' zugeordnet, die jeweils aus nur einer einzigen Windung besteht. Diese Windung kann beispielsweise von einem isolierten Leiter gebildet sein.

Elektrisch sind die einzelnen Trennwandspulen in Serie geschaltet, wobei der Ausgang der jeweils darüber liegenden Trennwand-Spule 7' mit dem Eingang der darunter liegenden Trennwand-Spule 7' verbunden ist. Die Kontaktstellen sind mit 35 bezeichnet.

Diese Trennwand-Spulen 7' können alternativ oder zusätzlich zur Spule 7 der vorhergehenden Figuren vorhanden sein. Wenn sie nur alternativ zu dieser Spule vorhanden sind, dann bilden diese Trennwand-Spulen zusammen diese Spule 7.

Bevorzugt ist die Windung zumindest an der Einström- bzw. Ausströmseite maximal so hoch wie die Trennwand selbst, womit das Durchströmen nicht behindert wird. An den Seitenflächen kann die Spule höher sein. Hier können auch die Abstandhalter 34 (beispielsweise ausgebildet in der Isolierung der Trennwand-Spule 7') sowie die Kontakte 35 angeordnet sein. Die Windung der Spule kann auch aus einer eluxierten Aluminiumfolie bestehen. Es ist auch möglich, diese Windung auf einer Leiterplatte aufzubringen. Die Leiterplatten werden dann als Multi-Layer gestapelt.

Die Trennwände 15' sind vorzugsweise aus magnetisch leitendem, ferromagnetischen Material und bilden den Kern der einzelnen Trennwandspulen,

Wenn man diese Trennwand-Einzelspulen einsetzt, kann - wie bereits erwähnt - die Spule der vorhergehenden Ausführungsbeispiele mit der Bezugsziffer 7 entfallen. Damit erzielt man einen Gewichts- und Platzvorteil. Bei besonders starken Magnetfeldern kann man aber beide Spulen, nämlich die Spule 7 und die Trennwand-Spulen 7' einsetzen.

## Patentansprüche

1. Energie absorbierende Vorrichtung für den einmaligen Insassenschutz in Fahrzeugen, mit einem Behälter (1), der über eine Engstelle in einen Austrittskanal übergeht, wobei im Behälter (1) eine magnetorheologische Flüssigkeit (3) enthalten ist, die bei einem Aufprall des Fahrzeugs durch eine Fließstrecke (5) gedrückt wird, die im Austrittskanal des Behälters (1) vorgesehen ist, und mit einer ein veränderbares Magnetfeld (10) erzeugenden Einrichtung (2), die zwei ebene, der Fließstrecke (5) zugeordnete Polflächen (11, 12) aufweist, zwischen denen das Magnetfeld (10) zur Regelung der Fließeigenschaften auf die magnetorheologische Flüssigkeit (3) einwirkt, **dadurch gekennzeichnet, dass** die Fließstrecke (5) durch zumindest eine zwei zusätzliche ebene Polflächen (13, 14) bildende Trennwand (15) in zumindest zwei Strömungsbahnen (16) unterteilt ist.

2. Vorrichtung nach Anspruch 1, **dadurch gekennzeichnet, dass** mehrere Trennwände (15) parallel zueinander in mindestens einem Paket (17) zusammengefasst sind.

3. Vorrichtung nach Anspruch 2, **dadurch gekennzeichnet, dass** sich die Trennwände (15) parallel zu den Strömungsbahnen (16) erstrecken und voneinander durch Distanzstücke, beispielsweise hochstehende Laschen (18) auf Abstand gehalten sind.

4. Vorrichtung nach Anspruch 1, **dadurch gekennzeichnet, dass** sich die Trennwand (15) in einer Querschnittsebene der Fließstrecke (5) erstreckt und die Strömungsbahnen (16) bildende Schlitze (19) aufweist, wobei die Schlitzwände die zusätzlichen Polflächen (13, 14) darstellen.

5. Vorrichtung nach Anspruch 4, **dadurch gekennzeichnet, dass** mehrere Trennwände (15) zu einem Paket (17) dicht aneinander gereiht sind, wobei die Schlitze (19) fluchten.

6. Vorrichtung nach Anspruch 3 oder 5, **dadurch gekennzeichnet, dass** die Trennwände (15) aus Transformatorenblech gestanzt und vorzugsweise zumindest an den einander berührenden Flächen isoliert, insbesondere lackiert sind.

7. Vorrichtung nach einem der Ansprüche 2 bis 6, **dadurch gekennzeichnet, dass** das Paket (17) einen über die Länge durchgehenden Hohlraum (21) aufweist.

8. Vorrichtung nach einem der Ansprüche 1 bis 7, **dadurch gekennzeichnet, dass** die das veränderbare Magnetfeld erzeugende Einrichtung (2) einen von einer Spule (7) umwickelten Kern (6) aufweist, der die in der Fließstrecke (5) angeordnete Trennwand (15) bildet, wobei die Achse der Spule (7) senkrecht zu den Strömungsbahnen (16) liegt.

9. Vorrichtung nach einem der Ansprüche 1 bis 8, **dadurch gekennzeichnet, dass** die Fließstrecke (5) in einem zylindrischen Austrittskanal vorgesehen ist, und ebene äußere Polflächen (11, 12) an kreissegmentförmigen Elementen (23) vorgesehen sind, deren gewölbte Flächen an der Innenwand des Austriftskanales anliegen.

10. Vorrichtung nach Anspruch 9, **dadurch gekennzeichnet, dass** der Kern (6) innerhalb der Spule (7) ebenfalls Strömungsbahnen (16) enthält, wobei die Wicklung der Spule (7) die Ein- und Austrittsöffnungen der Strömungsbahnen (16) frei lassen.

11. Vorrichtung nach einem der Ansprüche 1 bis 10, **dadurch gekennzeichnet, dass** die Fließstrecke durch mehrere beabstandete Trennwände (15') in Strömungsbahnen unterteilt ist, und zumindest einem Teil der Trennwände, vorzugsweise jeder Trennwand, eine eigene Trennwand-Spule zugeordnet ist, die im Bereich der Stirnflächen der Trennwände um diese herum geführt ist.

12. Vorrichtung nach Anspruch 11, **dadurch gekennzeichnet, dass** die Trennwand-Spule eine einzige Windung aufweist.

13. Vorrichtung nach Anspruch 11 oder 12, **dadurch gekennzeichnet, dass** die Trennwand-Spule von einem isolierten Leiter gebildet ist.

14. Vorrichtung nach einem der Ansprüche 1 bis 13, **dadurch gekennzeichnet, dass** die Trennwand-Spulen benachbarten Trennwände elektrisch verbunden, vorzugsweise in Serie geschaltet sind.

15. Vorrichtung nach einem der Ansprüche 1 bis 14, **dadurch gekennzeichnet, dass** die Vorrichtung bei maximal angelegtem Magnetfeld den Durchtritt der magnetorheologischen Flüssigkeit durch die Strömungsbahnen (9) sperrt.

16. Vorrichtung nach Anspruch 15, **dadurch gekennzeichnet, dass** mit der Vorrichtung Drücke in der magnetorheologischen Flüssigkeit bis zu 60 bar, vorzugsweise bis zu 200 bar, sperrbar sind.

17. Vorrichtung nach einem der Ansprüche 1 bis 16, **dadurch gekennzeichnet, dass** die magnetorheologische Flüssigkeit (3) in einer einen vorgegebenen Berstbereich (32) aufweisenden Kapsel (31) eingeschlossen ist, der bei Überschreitung einer definierten äußeren Krafteinwirkung platzt.

18. Vorrichtung nach Anspruch 17, **dadurch gekennzeichnet, dass** der Berstbereich (32) der Kapsel (31) an einem der beiden Enden der Fließstrecke (5) vorgesehen ist.

19. Lenksäule mit einer Energie absorbierenden Vorrichtung nach einem der Ansprüche 1 bis 18.

## Claims

1. An energy-absorbing apparatus for single-use occupant protection in vehicles comprising a receptacle (1), an outlet duct, and a contraction therebetween, the receptacle (1) containing a magneto-rheological fluid (3) which is pressed through a flow zone (5) in the event of an impact of the vehicle, the flow zone (5) being disposed in the outlet duct of the receptacle (1), and comprising a device (2) configured to generate a variable magnetic field (10), said device (2) including two plane pole faces (11, 12) assigned to said flow zone (5) and configured to cause the magnetic field (10) to act on the magneto-rheological fluid (3) in order to regulate flow properties thereof, **characterized in that** the flow zone (5) is divided by at least one partition (15) into at least two flow routes (16), said at least one partition (15) forming two additional plane pole faces (13, 14).

2. The apparatus according to claim 1, **characterized in that** a plurality of partitions (15) is combined in at least one bundle (17) with said partitions extending parallel to one another.

3. The apparatus according to claim 2, **characterized in that** said partitions (15) extend parallel to the flow routes (16) and are spaced apart from one another by spacer pieces, for example upstanding tabs (18).

4. The apparatus according to claim 1, **characterized in that** said partition (15) extends in a cross-sectional plane of said flow zone (15) and is formed with slots (19) forming said flow routes (16), and wherein the slot walls constitute the additional pole faces (13, 14).

5. The apparatus according to claim 4, **characterized in that** a plurality of partitions (15) is lined up closely to one another to form a bundle (17), with said slots (19) being in alignment with one another.

6. The apparatus according to claim 3 or 5, **characterized in that** the partitions (15) are stamped out of transformer sheet and are insulated, preferably at least on faces touching one another, in particular lacquered.

7. The apparatus according to one of claims 2 to 6, **characterized in that** the bundle (17) is formed with a cavity (21) continuous over a length thereof.

8. The apparatus according to one of claims 1 to 7, **characterized in that** the device (2) for generating the variable magnetic field includes a core (6) wound with a coil (7) and forming said partition (15) arranged in said flow zone (5), wherein the axis of said coil (7) is oriented perpendicularly to the flow routes (16).

9. The apparatus according to one of claims 1 to 8, **characterized in that** said flow zone (5) is provided in a cylindrical outlet duct, and wherein planar outer pole faces (11, 12) are provided on elements (23) shaped like segments of a circle, said elements having curved faces bearing against an inner wall of said outlet duct

10. The apparatus according to claim 9, **characterized in that** said core (6) within said coil (7) is formed with additional flow routes (16), the winding of said coil (7) leaving free inlet and outlet orifices of said flow routes (16).

11. The apparatus according to one of claims 1 to 10, **characterized in that** said flow zone is divided into flow routes by a plurality of spaced-apart partitions (15'), and wherein at least a part of said partitions, preferably each partition is assigned a specific partition coil that is led around said partitions in the area of said end faces thereof.

12. The apparatus according to claim 11, **characterized in that** the partition coil has a single turn.

13. The apparatus according to claim 11 or 12, **characterized in that** the partition coil is formed by an insulated conductor.

14. The apparatus according to one of claims 1 to 13, **characterized in that** the partition coils of adjacent partitions are electrically connected to one another, preferably connected in series.

15. The apparatus according to one of claims 1 to 14, **characterized in that** the device is configured such that, upon a maximum applied magnetic field, the apparatus blocks the passage of the magneto-rheological fluid through the flow routes (9).

16. The apparatus according to claim 15, **characterized in that** the device is configured to block the magneto-rheological fluid against pressures of up to 60 bar, preferably up to 200 bar.

17. The apparatus according to one of claims 1 to 16, **characterized in that** said magneto-rheological fluid (3) is enclosed in a capsule (31), and said capsule has a predetermined bursting region (32) configured to burst when a defined external force action is exceeded.

18. The apparatus according to claim 17, **characterized in that** said bursting region (32) of said capsule (31) is provided at one of two ends of said flow zone (5).

19. A steering column comprising an energy-absorbing apparatus according to one of claims 1 to 18.

## Revendications

1. Dispositif absorbant l'énergie, pour la protection une seule fois de passagers dans des véhicules, avec un récipient (1), se transformant, par l'intermédiaire d'un point de rétrécissement, en un canal de sortie, dans le récipient (1) étant contenu un liquide (3) magnéto-rhéologique qui, dans le cas d'un impact du véhicule, est pressé à travers une veine d'écoulement (5), prévue dans le canal de sortie du récipient (1), et avec un dispositif (2), générant un champ magnétique (10) modifiable, présentant deux faces polaires (11, 12) planes, associées à la veine d'écoulement (5), entre lesquelles le champ magnétique (10) agit sur le liquide (3) magnéto-rhéologique pour réguler les propriétés d'écoulement, **caractérisé en ce que** la veine d'écoulement (5) est subdivisée en au moins deux pistes d'écoulement (16), à l'aide d'au moins une paroi de séparation (15) formant deux faces polaires (13, 14) planes supplémentaires

2. Dispositif selon la revendication 1, **caractérisé en ce que** plusieurs parois de séparation (15) sont regroupées, parallèlement entre elles, en au moins un paquet (17).

3. Dispositif selon la revendication 2, **caractérisé en ce que** les parois de séparation (15) s'étendent parallèlement aux pistes d'écoulement (16) et sont maintenues à distance les unes des autres à l'aide de pièces d'espacement, par exemple des pattes (18) relevées.

4. Dispositif selon la revendication 1, **caractérisé en ce que** la paroi de séparation (15) s'étend dans un plan de section transversale de la veine d'écoulement (5) et présente des fentes (19) formant les pistes d'écoulement (16), les parois de fente constituant les faces polaires (13, 14) supplémentaires.

5. Dispositif selon la revendication 4, **caractérisé en ce que** plusieurs parois de séparation (15) sont alignées près les unes des autres en un paquet (17), les fentes (19) étant alignées.

6. Dispositif selon la revendication 3 ou 5, **caractérisé en ce que** les parois de séparation (15) sont obtenues d'estampage à partir de tôles pour transformateur et, de préférence, isolées, en particulier vernies, au moins sur les faces en contact les unes sur les autres.

7. Dispositif selon l'une des revendications 2 à 6, **caractérisé en ce que** le paquet (17) présente un espace creux (21) continu sur la longueur.

8. Dispositif selon l'une des revendications 1 à 7, **caractérisé en ce que** le dispositif (2), générant le champ magnétique modifiable, présente un noyau (6), enveloppé par une bobine (7), formant la paroi de séparation (15) disposée dans la veine d'écoulement (5), l'axe de la bobine (7) étant perpendiculaire aux pistes d'écoulement (16).

9. Dispositif selon l'une des revendications 1 à 8, **caractérisé en ce que** la veine d'écoulement (5) est prévue dans un canal de sortie cylindrique, et des faces polaires (11, 12) extérieures planes étant prévues sur des éléments (23) en forme de segments de cercle, dont des faces incurvées appuient sur la paroi intérieure du canal de sortie.

10. Dispositif selon la revendication 9, **caractérisé en ce que** le noyau (8) contient également à l'intérieur de la bobine (7) des pistes d'écoulement (16), le bobinage de la bobine (7) laissant dégagées les ouvertures d'entrée et de sortie des pistes d'écoulement (16).

11. Dispositif selon l'une des revendications 1 à 10, **caractérisé en ce que** la veine d'écoulement (5) est subdivisée en pistes d'écoulement, à l'aide de plusieurs parois de séparation (15') espacées, et à au moins une partie des parois de séparation, de préférence à chaque paroi de séparation, est associée une bobine de paroi de séparation spécifique, qui, dans la zone des faces frontales des parois de séparation, est guidée autour de celles-ci.

12. Dispositif selon la revendication 11, **caractérisé en ce que** la bobine de paroi de séparation présente une spire unique.

13. Dispositif selon la revendication 11 ou 12, **caractérisé en ce que** la bobine de paroi de séparation est formée par un conducteur isolé.

14. Dispositif selon l'une des revendications 1 à 13, **caractérisé en ce que** les bobines de paroi de séparation de parois de séparation voisines sont reliées électriquement, de préférence sont branchées en série.

15. Dispositif selon l'une des revendications 1 à 14, **caractérisé en ce que**, lorsque le champ magnétique appliqué est maximal, le dispositif bloque le passage du liquide magnéto-rhéologique à travers les pistes d'écoulement (9).

16. Dispositif selon la revendication 15, **caractérisé en ce que** des pressions dans le liquide magnéto-rhéologique allant jusqu'à 60 bar, de préférence jusqu'à 200 bar, peuvent être bloquées avec le dispositif.

17. Dispositif selon l'une des revendications 1 à 16, **caractérisé en ce que** le liquide (3) magnéto-rhéologique est enfermé dans une capsule (31), présentant une zone d'éclatement (32) prédéterminée, éclatant en cas de dépassement de l'effet d'une force extérieure définie.

18. Dispositif selon la revendication 17, **caractérisé en ce que** la zone d'éclatement (32) de la capsule (31) est prévue sur l'une des deux extrémités de la veine d'écoulement (5).

19. Colonne de direction, équipée d'un dispositif absorbant l'énergie selon l'une des revendications 1 à 18.
